# EUROPÄISCHE PATENTSCHRIFT

(11) **EP 3 687 793 B1**
(45) Veröffentlichungstag und Bekanntmachung des Hinweises auf die Patenterteilung: **26.01.2022**
(21) Anmeldenummer: 18833228.2
(22) Anmeldetag: 20.12.2018
(51) Int. Cl.: B32B 17/10, G02F 1/1333

(54) **FAHRZEUGSCHEIBE MIT VERBUND, DER EINE FLÜSSIGKRISTALLANORDNUNG UMFASST**
VEHICLE PANE INCORPORATING A COMPOSITE STRUCTURE COMPRISING A LIQUID CRYSTAL ARRANGEMENT
VITRE DE VÉHICULE DOTÉE D'UNE STRUCTURE COMPOSITE COMPRENANT UN ENSEMBLE À CRISTAUX LIQUIDES

(43) Veröffentlichungstag der Anmeldung: 05.08.2020
(73) Patentinhaber: Webasto SE, 82131 Stockdorf (DE)
(72) Erfinder: BUCHMANN, Max, 80801 München (DE); DIETRICH, Jonas, 82131 Stockdorf (DE); LORENZ, Steffen, 82131 Krailling (DE); BAIERL, Daniela, 82131 Stockdorf (DE); DIETRICH, Sascha, 82131 Stockdorf (DE); BROSE, Daniel, 82131 Stockdorf (DE); LEE, Seongmin, Yuseung-gu Daejeon 34122 (KR); JEON, Byoung Kun, Yuseung-gu Daejeon 34122 (KR)
(74) Vertreter: advotec.
(86) Internationale Anmeldenummer: PCT/EP2018/086373
(87) Internationale Veröffentlichungsnummer: WO 2020/126011

(56) Entgegenhaltungen:
- WO-A1-2018/233990
- US-A1- 2004 008 297
- US-B2- 6 764 614

## Beschreibung

Die Erfindung betrifft eine Fahrzeugscheibe mit den Merkmalen des Oberbegriffs des Patentanspruchs 1.

Eine derartige Fahrzeugscheibe ist aus der Praxis bekannt und kann ein verstellbares oder festes Dachelement eines Kraftfahrzeugs sein. Die Fahrzeugscheibe umfasst einen plattenartigen Scheibenkörper, der in der Regel aus Glas besteht und eine Außenhaut des Dachelements bildet. An seiner Innenseite ist der Scheibenkörper mit einem Verbundaufbau versehen, der als Funktionsschicht eine Flüssigkristallanordnung umfasst, die elektrisch schaltbar ist und so die Lichtdurchlässigkeit der Fahrzeugscheibe vorgibt. In Abhängigkeit vom Schaltzustand der Flüssigkristallanordnung ist die Fahrzeugscheibe entweder weitgehend lichtdurchlässig oder weitgehend lichtundurchlässig, so dass sie eine Beschattungsanordnung bildet.

Zudem ist es bekannt, bei einer Fahrzeugscheibe der vorstehend beschriebenen Art als weitere Funktionsschicht eine Polarisatorschicht einzusetzen. Diese hat in Querrichtung der Scheibe die gleichen Abmessungen wie die Flüssigkristallanordnung. Ferner hat der Verbund Laminationszwischenschichten, die die Verbindung zwischen den Funktionsschichten und die Verbindung mit dem Scheibenkörper herstellen. Die Laminationszwischenschichten haben eine Größe, die sich zumindest über die Flüssigkristallanordnung erstreckt.

Bei der Herstellung der vorstehend beschriebenen Fahrzeugscheibe nach einem Laminationsprozess, bei dem der Verbund definierten Drücken und Temperaturen ausgesetzt wird, kann es aufgrund einer Wärmeausdehnung der Flüssigkristallzelle und aufgrund von Inhomogenitäten in den eingesetzten Werkstoffen zu optischen Fehlern in der Flüssigkristallzelle kommen, die durch lokale Konzentrationen des Materials der Flüssigkristallzelle entstehen und als so genannte "dark spots" bezeichnet werden. Diese können sich auch im Sichtbereich der Fahrzeugscheibe ausbilden, was wiederum das Erscheinungsbild derselben stört.

Der Erfindung liegt die Aufgabe zugrunde, eine Fahrzeugscheibe der einleitend genannten Art zu schaffen, bei der das Risiko der Ausbildung von lokalen Ansammlungen des Stoffes der Flüssigkristallzelle im Sichtbereich der Fahrzeugscheibe minimiert ist.

Diese Aufgabe ist erfindungsgemäß durch die Fahrzeugscheibe mit den Merkmalen des Patentanspruchs 1 gelöst.

Erfindungsgemäß wird also eine Fahrzeugscheibe vorgeschlagen, die einen plattenartigen Scheibenkörper umfasst, der eine einer Fahrzeugumgebung zugewandte Außenseite und eine der Außenseite abgewandte Innenseite hat, an die ein Verbund angebunden ist, der einen Schichtaufbau hat, der mehrere, übereinander angeordnete Schichten umfasst, von denen eine eine Flüssigkristallanordnung, die zwei Folien und eine zwischen den beiden Folien angeordnete Flüssigkristallzelle umfasst, und eine weitere eine Polarisatorschicht ist. Mindestens eine Schicht des Schichtaufbaus ist eine Verdrängungsschicht, deren Grundfläche kleiner ist als die Grundfläche der Flüssigkristallanordnung, so dass die Flüssigkristallzelle einen Randbereich hat, der gegenüber einem Zentralbereich, der mit der Verdrängungsschicht in Überdeckung ist, verdickt ist.

Durch die Verdrängungsschicht wird in gezielter Weise eine Ansammlung des Materials der Flüssigkristallzelle in dem Randbereich erreicht, so dass optische Fehler bzw. so genannte "dark spots" in diesen Bereich, der vorzugsweise außerhalb des Sichtbereichs liegt, verschoben werden können. Es bildet sich also in dem Randbereich der Flüssigkristallzelle ein Flüssigkristallreservoir aus. Dies wird dadurch ermöglicht, dass die Verdrängungsschicht beim Ausbilden des Verbunds seitlich von einem Leerbereich begrenzt ist, der in Überdeckung mit den betreffenden Randbereichen der Flüssigkristallzelle ist. Der Druck, der auf den Randbereich der Flüssigkristallanordnung ausgeübt ist, ist im Vergleich zu dem Druck in dem Zentralbereich verringert, was wiederum die Ansammlung des Materials der Flüssigkristallzelle und die Verdickung derselben in dem Randbereich bewirkt.

Die Verdrängungsschicht kann in unterschiedlicher Art und Weise ausgebildet sein. Beispielsweise ist die Verdrängungsschicht von der Polarisatorschicht gebildet, die dann eine kleinere Grundfläche als die Flüssigkristallanordnung hat und in dem Verbund seitlich von einem Leerbereich begrenzt ist.

Bei einer alternativen Ausführungsform der Fahrzeugscheibe nach der Erfindung ist die Verdrängungsschicht von einer Zusatzschicht, insbesondere von einer Zusatzfolie gebildet. Die Zusatzschicht kann verschiedene Positionen in dem Verbund einnehmen. Beispielsweise grenzt die Zusatzschicht an die Flüssigkristallanordnung oder an die Polarisatorschicht. Auch kann die Zusatzschicht zwischen der Flüssigkristallanordnung und der Polarisatorschicht oder zwischen dem plattenartigen Scheibenkörper und der Flüssigkristallanordnung angeordnet sein, wenn die Polarisatorschicht an der dem Scheibenkörper abgewandten Seite der Flüssigkristallanordnung angeordnet ist.

Bei einer bevorzugten Ausführungsform der Fahrzeugscheibe nach der Erfindung hat die Zusatzschicht eine Dicke zwischen 10 µm und 500 µm. Diese Dicke ist ausreichend, um eine Verdickung der Flüssigkristallzelle im Randbereich zu erreichen. Gleichzeitig wird aber die Gesamtdicke der Fahrzeugscheibe nicht wesentlich vergrößert.

Des Weiteren kann die Fahrzeugscheibe nach der Erfindung an ihrer Innenseite einen Glasinnenkörper aufweisen, der mit dem Schichtaufbau verklebt ist. In diesem Falle kann die Zusatzschicht auch an den Glasinnenkörper grenzen.

Der Schichtaufbau des Verbunds ist vorzugsweise mittels einer Klebeschicht, beispielsweise mittels einer Klebefolie an den Scheibenkörper angebunden.

Des Weiteren kann der Schichtaufbau eine Klebeschicht zwischen der Flüssigkristallanordnung und der Polarisatorschicht umfassen. Auch diese Klebeschicht kann von einer Klebefolie gebildet sein.

Grundsätzlich können die vorgenannte Klebeschichten jeweils aus einer Acrylatschicht, einer Schicht aus thermoplastischem Polyurethan, einer Epoxidschicht, einer Silikonschicht, einer Polyethylenschicht oder aus einer Schicht aus einem vernetzten Material, wie Ethylenvinylacetat (EVA) oder Polyvinylbutyral (PVB) gebildet sein. Entsprechend kann die Zusatzschicht, die die Ansammlung des Materials der Flüssigkristallzelle in deren Randbereich bewirkt, aus einer Acrylatschicht, einer Schicht aus thermoplastischem Polyurethan, einer Epoxidschicht, einer Silikonschicht, einer Polyethylenschicht oder aus einer Schicht aus einem vernetzenden Material, wie Ethylenvinylacetat (EVA) oder Polyvinylbutyral (PVB) gebildet sein.

Der Randbereich der Flüssigkristallanordnung, der nicht in Überdeckung mit der Verdrängungsschicht liegt, hat vorzugsweise eine Breite zwischen 5 mm und 40 mm.

Zudem kann die Flüssigkristallanordnung durch eine Randversiegelung, die einen umlaufenden Rand des Schichtaufbaus begrenzt, vor Umwelteinflüssen geschützt sein. Die Randversiegelung kann aus einem Folienaufbau bestehen, dessen Materialien den oben genannten Materialien der Zusatzschicht bzw. der Klebeschicht entsprechen können.

Der Scheibenkörper der Fahrzeugscheibe nach der Erfindung kann eine dreidimensionale Wölbung haben. Beispielsweise hat der Scheibenkörper in zwei Richtungen, bei einer Dachscheibe entlang einer Fahrzeugquerrichtung und entlang einer Fahrzeuglängsrichtung, jeweils eine Wölbung mit einem Krümmungsradius zwischen 1.000 mm und 10.000 mm, vorzugsweise zwischen 2.000 mm und 5.000 mm, welcher sich über die Wölbung ändern kann, das heißt in der jeweiligen Richtung nicht konstant sein muss.

Die Flüssigkristallanordnung der Fahrzeugscheibe nach der Erfindung kann mit kurzen Schaltzeiten, die bei etwa einer Sekunde liegen, über einen weiten Temperaturbereich betrieben werden. Zudem kann eine geringe Spannung zur Betätigung der Flüssigkristallanordnung ausreichen. Die als Wechselspannung ausgebildete Spannung kann insbesondere unter 30 V liegen. Die Frequenz der Wechselspannung beträgt beispielsweise 60 Hz, kann aber je nach gewünschter Geschwindigkeit der Ausrichtung der Flüssigkristalle auch höher sein und bis zu 100 bis 120 Hz betragen oder auch niedriger sein.

Ferner bietet die Flüssigkristallanordnung im ungeschalteten Zustand eine sehr geringe Transmission, die für sichtbares Licht unter 1 % liegen kann. Die Farbe der Flüssigkristallanordnung ist beispielsweise grau, kann aber durch Beimischung von Farbstoffen kundenspezifisch angepasst sein.

Die Fahrzeugscheibe nach der Erfindung ist insbesondere ein Dachelement des betreffenden Fahrzeugs. Das Dachelement kann als Festdachelement, das starr mit dem Aufbau des betreffenden Fahrzeugs verbunden ist, oder auch als bewegliches Dachelement ausgebildet sein, das ein verfahrbares Deckelelement einer Schiebedachanordnung darstellt.

Der Scheibeninnenkörper, mit dem die Fahrzeugscheibe nach der Erfindung versehen sein kann, kann entsprechend dem Scheibenkörper ausgebildet sein und wie dieser beispielsweise aus Glas mit einer Dicke von etwa 1,5 mm bis 2,6 mm bestehen. Bei einer speziellen Ausführungsform der Fahrzeugscheibe nach der Erfindung ist der Scheibeninnenkörper aus einem Dünnglas gebildet, das biegsam ist und damit an eine etwaige Wölbung des plattenartigen Scheibenkörpers angepasst werden kann. Das Dünnglas, das ein chemisch vorgespanntes Glas sein kann, hat beispielsweise eine Dicke zwischen 0,1 mm und 1,5 mm.

Die Polarisatorschicht der Fahrzeugscheibe nach der Erfindung hat vorzugsweise eine Polarisationsrichtung, die rechtwinkelig zu einer Polarisationsrichtung der Flüssigkristallzelle im ungeschalteten Zustand ausgerichtet ist. Der geschaltete Zustand ist dann dem Transmissionszustand zugeordnet. Denkbar ist es aber auch, dass im ungeschalteten Zustand der Flüssigkristallzelle die Polarisationsrichtung der Polarisatorschicht parallel zur Polarisationsrichtung der Flüssigkristallzelle ist, so dass dann der Transmissionszustand der Gesamtanordnung vorliegt.

Die Verdrängungsschicht hat insbesondere bei einer Ausbildung als Zusatzschicht vorzugsweise einen Brechungsindex, der dem Brechungsindex der Folien der Flüssigkristallanordnung entspricht. Damit kann einer Mehrfachbrechung des Lichts beim Durchlaufen der Fahrzeugscheibe zumindest teilweise entgegengewirkt werden.

Bei einer bevorzugten Ausführungsform der Fahrzeugscheibe nach der Erfindung umfasst die Flüssigkristallanordnung eine einzige Flüssigkristallzelle, die sich zumindest weitgehend über die gesamte Flüssigkristallanordnung erstreckt und den potentiellen Durchsichtsbereich der Fahrzeugscheibe abdeckt.

Eine spezielle Ausführungsform der Fahrzeugscheibe nach der Erfindung umfasst zudem eine Lichtleiterschicht, die über ihren Rand mit einer Lichtquelle verbindbar ist oder über ihren Rand mit einer Lichtquelle verbunden ist. Die Lichtleiterschicht, die bei der Herstellung der Fahrzeugscheibe zusammen mit dem die Flüssigkristallanordnung umfassenden Verbund in einem einstufigen Prozess integriert werden kann, kann ein Beleuchtungssystem für den Innenraum des betreffenden Fahrzeugs darstellen. Insbesondere kann die Lichtleiterschicht Bestandteil einer sogenannten "Ambient-Light"-Beleuchtung des betreffenden Fahrzeugs sein. Bei dieser Ausführungsform sind also die Funktionalität der schaltbaren Flüssigkristallanordnung und die Funktionalität einer flächigen Beleuchtung, insbesondere einer "Ambient-Light"-Beleuchtung miteinander kombiniert. Zweckmäßigerweise sind die Lichtleiterschicht und die Flüssigkristallanordnung separat und unabhängig ansteuerbar, das heißt so schaltbar, dass die Flüssigkristallanordnung ihren Transmissionszustand oder ihren Sperrzustand einnimmt und die Lichtleiterschicht leuchtet oder nicht leuchtet.

Die Lichtleiterschicht ist vorzugsweise an der der Fahrzeugumgebung abgewandten Seite der Fahrzeugscheibe angeordnet, so dass die Lichtleiterschicht unabhängig vom Schaltzustand der Flüssigkristallanordnung vom Innenraum des betreffenden Fahrzeugs aus sichtbar ist, wenn sie aktiviert ist.

Die Lichtleiterschicht, die gewölbt sein kann und eine innere Sichtfläche der Fahrzeugscheibe bilden kann, kann aus beliebigen geeigneten Werkstoffen gefertigt sein. Insbesondere kann die Lichtleiterschicht einen flächigen Glaskörper umfassen, der auch den Scheibeninnenkörper der Fahrzeugscheibe bilden kann.

Bei einer alternativen Ausführungsform der Fahrzeugscheibe nach der Erfindung kann die Lichtleiterschicht eine Kunststofffolie und/oder eine Kunststoffplatte umfassen. Dies ist insbesondere vorteilhaft, wenn die Fahrzeugscheibe gewichtsoptimiert ausgebildet sein soll.

Zur Realisierung bestimmter Leuchteigenschaften kann die Lichtleiterschicht Streuzentren, die insbesondere von Nanopartikeln gebildet sind, eine Bedruckung und/oder eine Reflexionsschicht aufweisen.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer Fahrzeugscheibe nach der Erfindung sind in der Zeichnung schematisch vereinfacht dargestellt und werden in der nachfolgenden Beschreibung näher erläutert. Es zeigt:
- Figur 1: eine Draufsicht auf ein Fahrzeugdach mit einer Fahrzeugscheibe nach der Erfindung;
- Figur 2: einen Schnitt durch die Fahrzeugscheibe, der den Schichtaufbau derselben zeigt;
- Figur 3: einen Schnitt durch eine zweite Ausführungsform einer Fahrzeugscheibe;
- Figur 4: einen Schnitt durch eine dritte Ausführungsform einer Fahrzeugscheibe;
- Figur 5: einen Schnitt durch eine vierte Ausführungsform einer Fahrzeugscheibe;
- Figur 6: einen Schnitt durch eine fünfte Ausführungsform einer Fahrzeugscheibe;
- Figur 7: einen Schnitt durch eine sechste Ausführungsform einer Fahrzeugscheibe;
- Figur 8: einen Schnitt durch eine siebte Ausführungsform einer Fahrzeugscheibe;
- Figur 9: einen Schnitt durch eine achte Ausführungsform einer Fahrzeugscheibe;
- Figur 10: einen Schnitt durch eine neunte Ausführungsform einer Fahrzeugscheibe;
- Figur 11: einen Schnitt durch eine zehnte Ausführungsform einer Fahrzeugscheibe;
- Figur 12: einen Schnitt durch eine elfte Ausführungsform einer Fahrzeugscheibe;
- Figur 13: einen Schnitt durch eine zwölfte Ausführungsform einer Fahrzeugscheibe; und
- Figur 14: einen Schnitt durch eine dreizehnte Ausführungsform einer Fahrzeugscheibe.

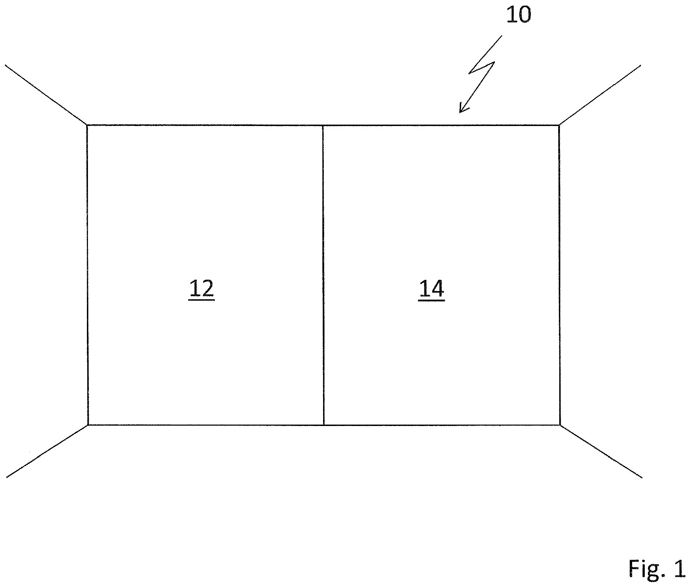

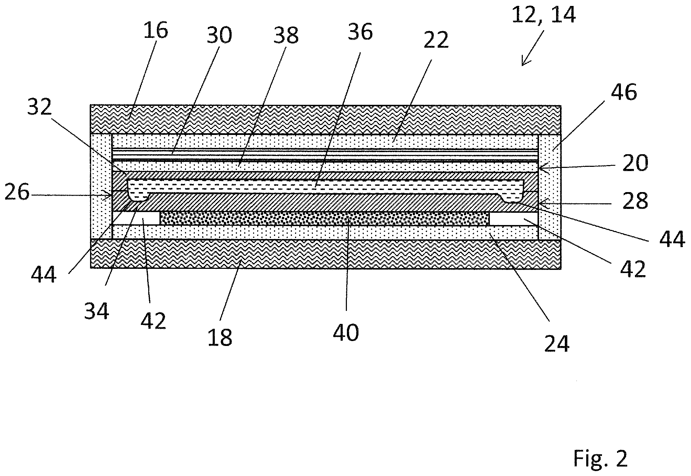

In Figur 1 ist ein Fahrzeugdach 10 eines ansonsten nicht näher dargestellten Kraftfahrzeuges gezeigt. Das Fahrzeugdach 10 ist ein Panoramadach, das mit einem verstellbaren Deckelelement 12 und einem Festdachelement 14 versehen ist, das gegenüber dem Fahrzeugaufbau bzw. der Fahrzeugkarosserie unbeweglich ist. Das Deckelelement 12 und das Festdachelement 14 sind jeweils als Glaselement ausgebildet und stellen so jeweils eine Fahrzeugscheibe dar. Zudem haben das Deckelelement 12 und das Festdachelement 14 den gleichen Schichtaufbau, der mit einer Beschattungsanordnung versehen ist und der in Figur 2 detailliert dargestellt ist.

Die jeweils eine Fahrzeugscheibe darstellenden Dachelemente 12 und 14 umfassen jeweils einen Scheibenkörper 16, der aus einer entlang einer Dachlängsrichtung und entlang einer Dachquerrichtung gewölbten Glasplatte gebildet ist und eine der Fahrzeugumgebung ausgesetzte Außenhaut der jeweiligen Fahrzeugscheibe bildet. An der Innenseite umfassen die Fahrzeugscheiben jeweils einen Scheibeninnenkörper 18, der ebenfalls aus einer gewölbten Glasplatte gebildet ist. Der Scheibenkörper 16 und der Scheibeninnenkörper 18 haben jeweils eine Dicke von etwa 2,0 mm.

Zwischen dem Scheibenkörper 16 und dem Scheibeninnenkörper 18 ist ein Verbund 20 angeordnet, der über eine TPU-Klebefolie 22 an den Scheibenkörper 16 und eine TPU-Klebefolie 24 an den Scheibeninnenkörper 18 angebunden ist. Zudem umfasst der Verbund 20 eine Beschattungsanordnung 26, die von einer Flüssigkristallanordnung 28 und einer Polarisatorschicht 30 gebildet ist. Die Flüssigkristallanordnung 28 umfasst zwei transparente Folien 32 und 34 aus PET oder Polycarbonat, zwischen denen eine einzige Flüssigkristallzelle 36 angeordnet ist. Die beiden transparenten Folien 32 und 34 haben jeweils eine Dicke von etwa 100 µm. Um die Flüssigkristallzelle 36 zwischen einem Transmissionszustand und einem Sperrzustand schalten zu können, sind in die Flüssigkristallanordnung 28 an den Innenseiten der Folien 32 und 34 leitfähige Schichten integriert, die über eine entsprechende, nicht näher dargestellte Kontaktierung mit dem Bordnetz des betreffenden Fahrzeugs verbunden sind. Auf den leitfähigen Schichten ist vorzugsweise jeweils eine Ausrichtungsschicht (alignment layer) angeordnet, welche die Flüssigkristallzelle 26 begrenzt. Die Ausrichtungsschichten dienen zur Vorausrichtung der Kristalle der Flüssigkristallzelle 26 im nicht geschalteten Zustand und können jeweils aus einem Polyimid oder einem UV-härtenden Acrylat gebildet sein.

Zwischen der Polarisatorschicht 30 und der Flüssigkristallanordnung 28 ist eine Klebeschicht 38 aus TPU angeordnet.

An der dem Scheibenkörper 16 abgewandten Seite ist an die Flüssigkristallanordnung 28 eine Zusatzschicht 40 angebunden, die mit ihrer dem Scheibenkörper 16 abgewandten Seite an die Klebefolie 24 grenzt und eine Verdrängungsschicht darstellt. Die Zusatzschicht 40 ist eine Zusatzfolie, die aus thermoplastischem Polyurethan (TPU) gefertigt ist und eine Dicke von etwa 100 µm hat. Wie des Weiteren Figur 2 zu entnehmen ist, hat die Zusatzschicht 40 eine Grundfläche, die kleiner ist als die Grundflächen der Flüssigkristallanordnung 28, der Polarisatorschicht 30, der Klebefolien 22 und 24 und der Klebeschicht 38. Damit ergibt sich unterhalb eines umlaufenden Randbereichs der Flüssigkristallanordnung 28 beim Verfügen des Verbunds 20 ein umlaufender Leerraum 42, der dazu führt, dass aufgrund des von der Zusatzschicht 40 ausgeübten Drucks auf die Flüssigkristallanordnung 28 die Flüssigkristallzelle 36 in dem oberhalb des Leerraums 42 angeordneten Randbereich im Vergleich zu einem Zentralbereich, der in Überdeckung mit der Zusatzschicht 40 ist, verdickt ist. Es bildet sich also in den Randbereichen der Flüssigkristallzelle 36 ein Flüssigkristallreservoir 44 aus, da sich dort das Flüssigkristallmaterial ansammelt. Der Leerraum 42 hat eine Breite von etwa 30 mm und liegt außerhalb des Durchsichtbereichs der Fahrzeugscheibe.

Des Weiteren ist die Fahrzeugscheibe mit einer Randversiegelung 46 versehen, die die Flüssigkristallanordnung 28 bzw. den Verbund 20 vor Umwelteinflüssen schützt.

Nach Durchführen eines Laminationsprozesses zur Herstellung der Fahrzeugscheibe kann der Leerraum 42 in Folge der bei diesem Prozess wirkenden Drücke und Temperaturen zumindest teilweise durch das Material der Klebefolie 24 und gegebenenfalls der Zusatzschicht 40 ausgefüllt sein.

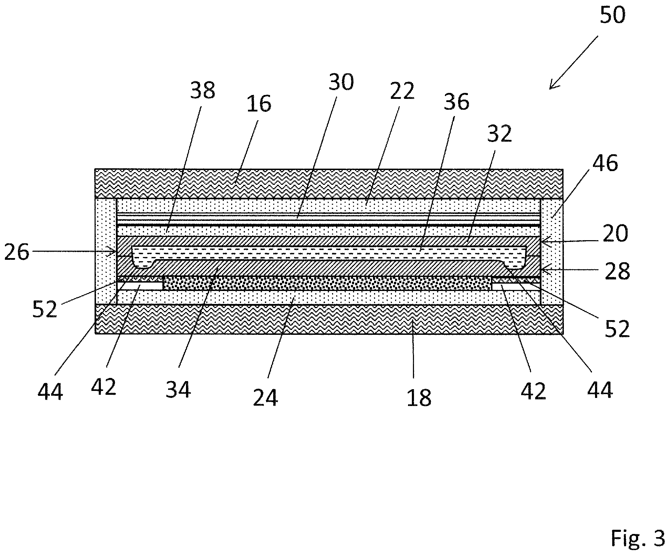

In Figur 3 ist eine alternative Ausführungsform einer Scheibenanordnung 50 dargestellt, die im Wesentlichen derjenigen nach Figur 2 entspricht, sich von dieser aber dadurch unterscheidet, dass an die untere Folie 34 der Flüssigkristallanordnung 28 im Bereich des Leerraums 42 eine Entkopplungsschicht 52 angebunden ist, die verhindern soll, dass das Polyurethan der Klebefolie 24 an der Flüssigkristallanordnung 28 haftet.

Im Übrigen entspricht die Scheibenanordnung 50 derjenigen nach Figur 2.

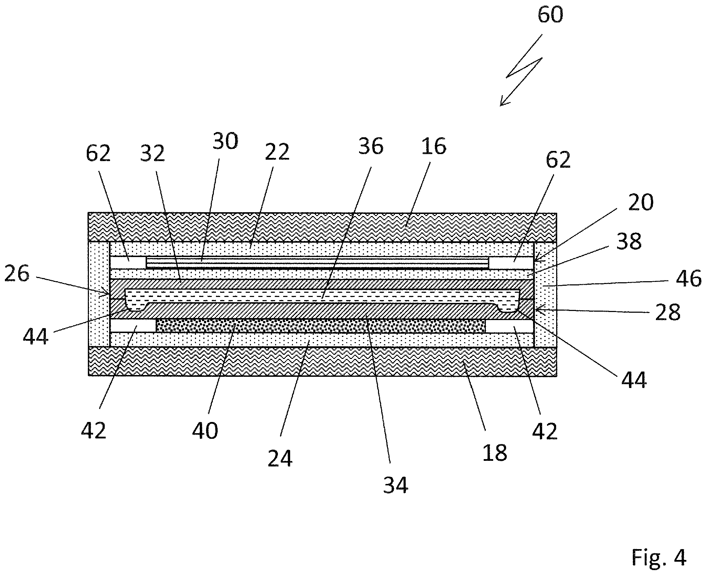

In Figur 4 ist eine Scheibenanordnung 60 dargestellt, die wiederum weitgehend derjenigen nach Figur 2 entspricht, sich von dieser aber dadurch unterscheidet, dass die Polarisatorschicht 30 eine Grundfläche bzw. Abmessungen hat, die den Abmessungen der Zusatzschicht 40 entspricht. Damit ist auch die Polarisatorschicht 30 von einem Leerraum 62 umschlossen, so dass auch die Polarsatorschicht 30 als Verdrängungsschicht wirkt und sich im Randbereich der Flüssigkristallzelle 36 das Flüssigkristallreservoir 44 ausbildet.

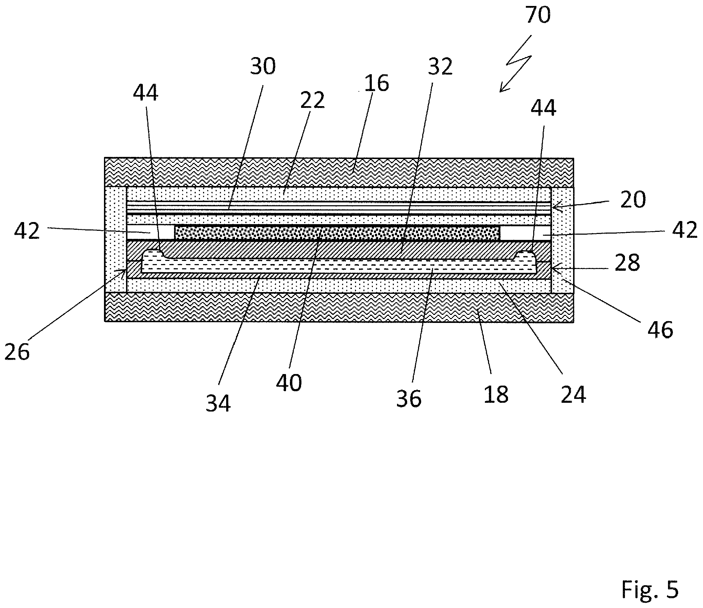

In Figur 5 ist eine weitere Ausführungsform einer Scheibenanordnung 70 dargestellt, die im Wesentlichen derjenigen nach Figur 2 entspricht, sich von dieser aber unterscheidet, dass die Zusatzschicht 40, welche eine Verdrängungsschicht bildet, an der Oberseite der Flüssigkristallanordnung 28 angeordnet ist. Die Zusatzschicht 40 ist also zwischen der Polarisatorschicht 30 und der Flüssigkristallanordnung 28 angeordnet. Im Übrigen entspricht die Scheibenanordnung 70 derjenigen nach Figur 2.

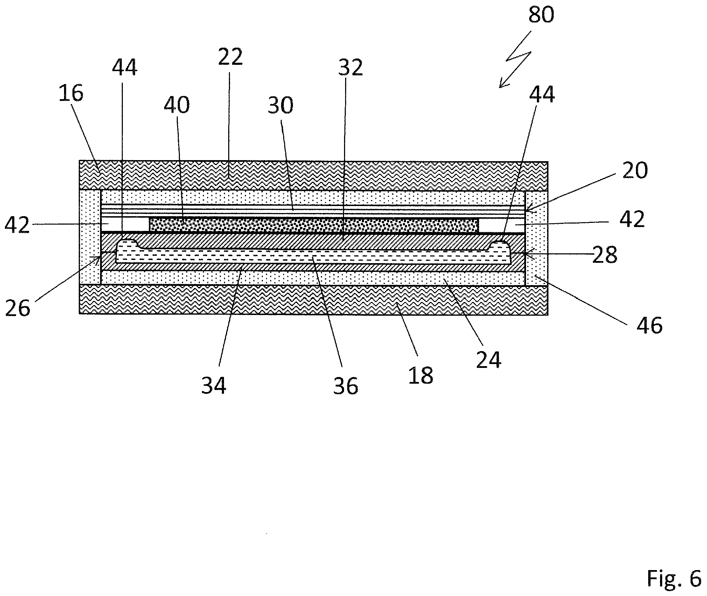

In Figur 6 ist eine eine weitere Ausführungsform darstellende Scheibenanordnung 80 gezeigt, die im Wesentlichen derjenigen nach Figur 5 entspricht, sich von dieser aber dadurch unterscheidet, dass zwischen der an der Oberseite der Flüssigkristallanordnung 28 angeordneten Zusatzschicht 40 und der Polarisatorschicht 30 keine weitere Klebeschicht angeordnet ist. Vielmehr bildet die Zusatzschicht 40, deren Grundfläche kleiner ist als diejenige der Polarisatorschicht 30 und der Flüssigkristallanordnung 28, eine Koppelschicht zwischen diesen beiden Funktionsschichten.

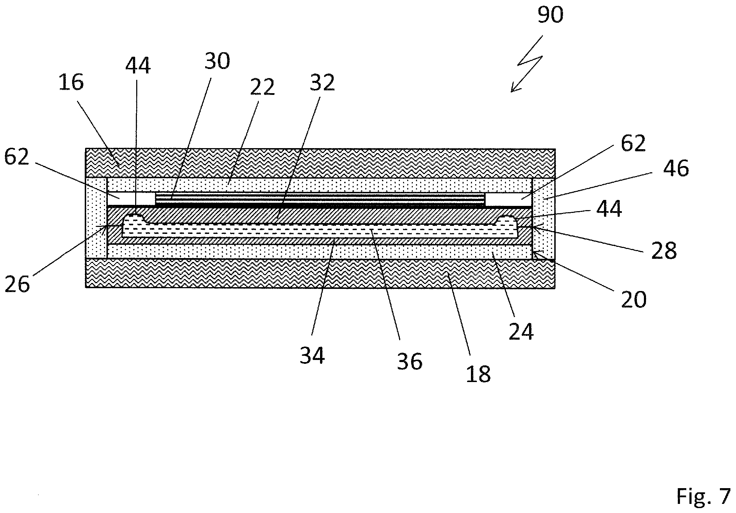

In Figur 7 ist eine eine weitere Ausführungsform darstellende Scheibenanordnung 90 gezeigt, welche weitgehend der Scheibenanordnung nach Figur 4 entspricht, sich von dieser aber dadurch unterscheidet, dass sie keine Zusatzschicht aufweist. Vielmehr stellt allein die Polarisatorschicht 30 eine Verdrängungsschicht dar, die die Ausbildung des Flüssigkristallreservoirs 44 bewirkt.

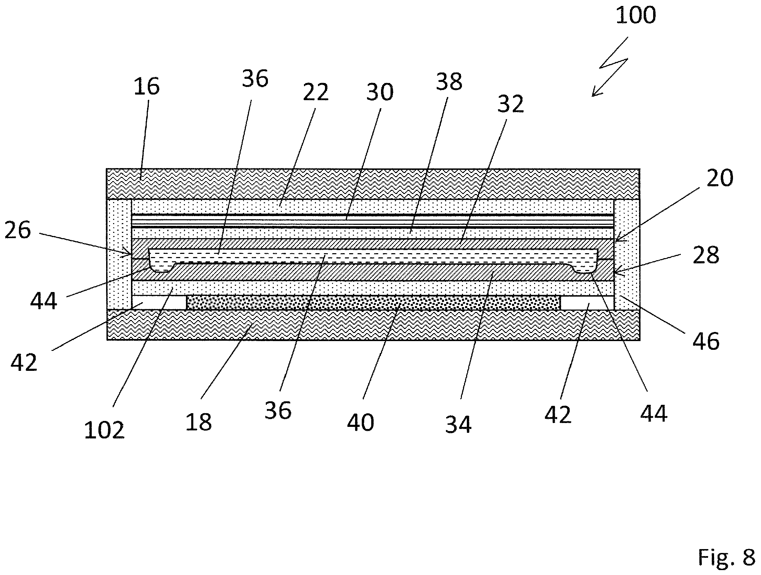

In Figur 8 ist eine Scheibenanordnung 100 dargestellt, die weitgehend der Scheibenanordnung nach Figur 2 entspricht, sich von dieser aber dadurch unterscheidet, dass die Zusatzschicht 40 nicht direkt an der Flüssigkristallanordnung 28, sondern angrenzend an den Scheibeninnenkörper 18 ausgebildet ist. Zwischen der Zusatzschicht 40 und der Flüssigkristallanordnung 28 ist zudem eine Klebeschicht 102 aus thermoplastischem Polyurethan angeordnet. Die Zusatzschicht 40, die die Verdrängungsschicht bildet, ist entsprechend den oben beschriebenen Ausführungsformen von einem Leerraum 42 begrenzt, der im verfügten Zustand des Verbunds 20 die Ausbildung eines Flüssigkristallreservoirs 44 im Randbereich der Flüssigkristallzelle 36 bewirkt. Im Übrigen entspricht die Scheibenanordnung 100 derjenigen nach Figur 2.

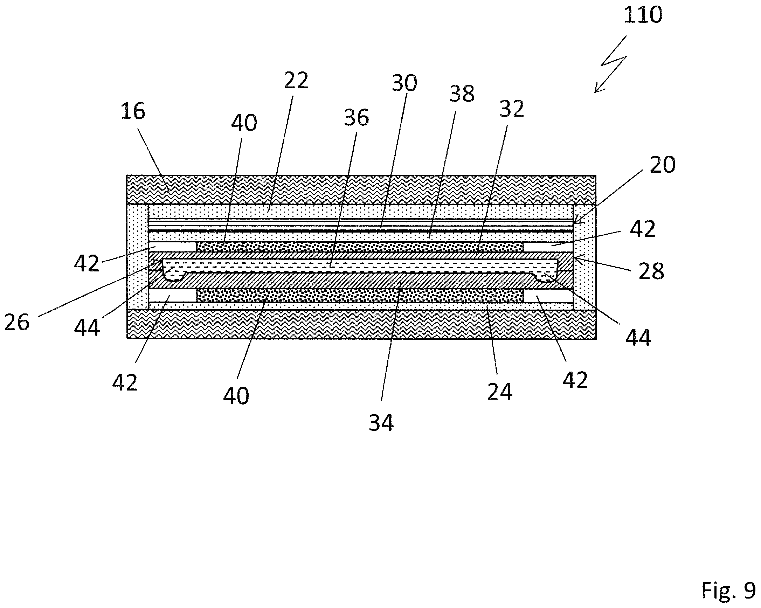

In Figur 9 ist eine Scheibenanordnung 110 dargestellt, die eine Kombination der in den Figuren 2 und 5 dargestellten Scheibenanordnungen darstellt und sowohl an der Unterseite als auch an der Oberseite der Flüssigkristallanordnung 28 eine Zusatzschicht 40 aufweist, welche eine Verdrängungsschicht darstellt und von einem Leerraum 42 begrenzt ist, der die Ausbildung einer verdickten Flüssigkristallzelle 36 in deren Randbereichen, das heißt die Ausbildung eines Flüssigkristallreservoirs 44 in den Randbereichen der Flüssigkristallzelle 36 aufgrund des von den Zusatzschichten 40 in einem Zentralbereich aufgebrachten Drucks begünstigt.

Im Übrigen entspricht die Scheibenanordnung 110 denjenigen nach den Figuren 2 und 5.

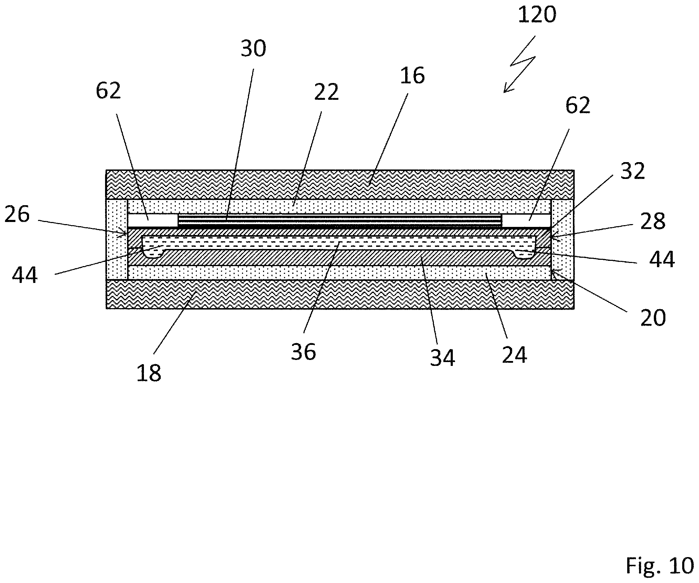

In Figur 10 ist eine weitere Scheibenanordnung 120 dargestellt, welche weitgehend entsprechend der Ausführungsform nach Figur 7 ausgebildet ist, sich von dieser aber dadurch unterscheidet, dass die Polarisatorschicht 30 direkt an der oberen Folie 32 der Flüssigkristallanordnung 28 anliegt. Wiederum bildet die Polarisatorschicht 30 eine Verdrängungsschicht, die aufgrund ihrer gegenüber der Flüssigkristallanordnung 28 verringerten Grundfläche von einem Leerraum 62 umgeben ist, der die Ausbildung eines Flüssigkristallreservoirs 44 in den Randbereichen der Flüssigkristallzelle 36 bewirkt. Im Übrigen entspricht die Scheibenanordnung 120 derjenigen nach Figur 7.

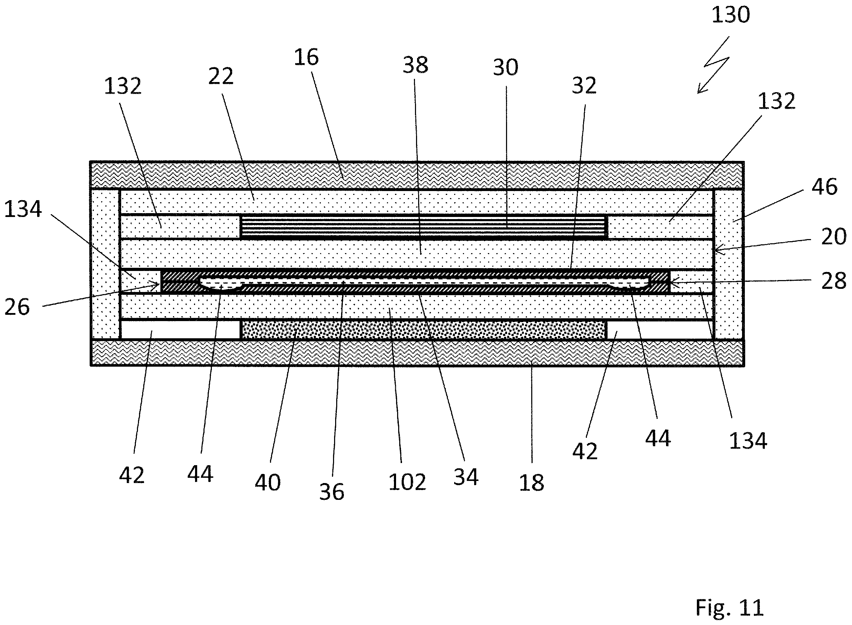

In Figur 11 ist eine Scheibenanordnung 130 dargestellt, welche weitgehend der Ausführungsform nach Figur 8 entspricht, sich von dieser aber dadurch unterscheidet, dass die Polarisatorschicht 30 eine Grundfläche hat, die der Grundfläche der Zusatzschicht 40 entspricht. In den Verbundbereichen, die seitlich an die Polarisatorschicht 30 grenzen und in Normalenrichtung mit dem Leerraum 42 fluchten, der an die Zusatzschicht 40 grenzt, ist ebenfalls eine TPU-Klebefolie 132 angeordnet. Zudem reicht die Flüssigkristallanordnung 28 nicht bis an die Randversiegelung 46. Vielmehr ist zwischen den seitlichen Rändern der Flüssigkristallanordnung 28 und der Randversiegelung 46 ein umlaufender Streifen 134 aus einer TPU-Folie angeordnet. Im Übrigen entspricht die Scheibenanordnung 130 derjenigen nach Figur 8, weswegen auf die Beschreibung derselben verwiesen wird.

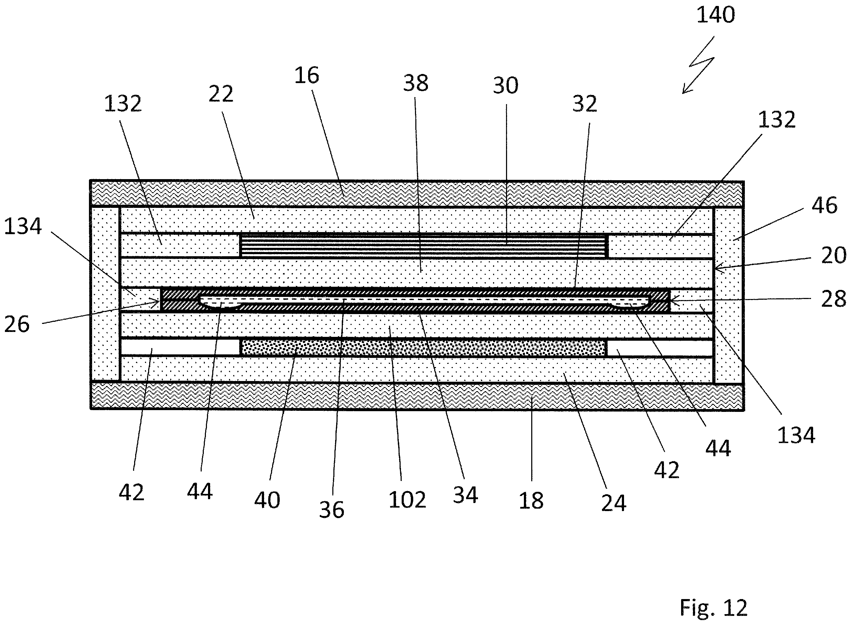

In Figur 12 ist eine Scheibenanordnung 140 dargestellt, die weitgehend derjenigen nach Figur 11 entspricht, sich von dieser aber dadurch unterscheidet, dass zusätzlich zwischen der Klebeschicht 102 und dem Scheibeninnenkörper 18 eine Klebefolie 24 angeordnet ist, die wiederum aus TPU besteht. Im Übrigen entspricht die Scheibenanordnung 140 derjenigen nach Figur 11. Die Poralisatorschicht 30 hat also eine Grundfläche, die mit der Grundfläche der Zusatzschicht 40 korrespondiert.

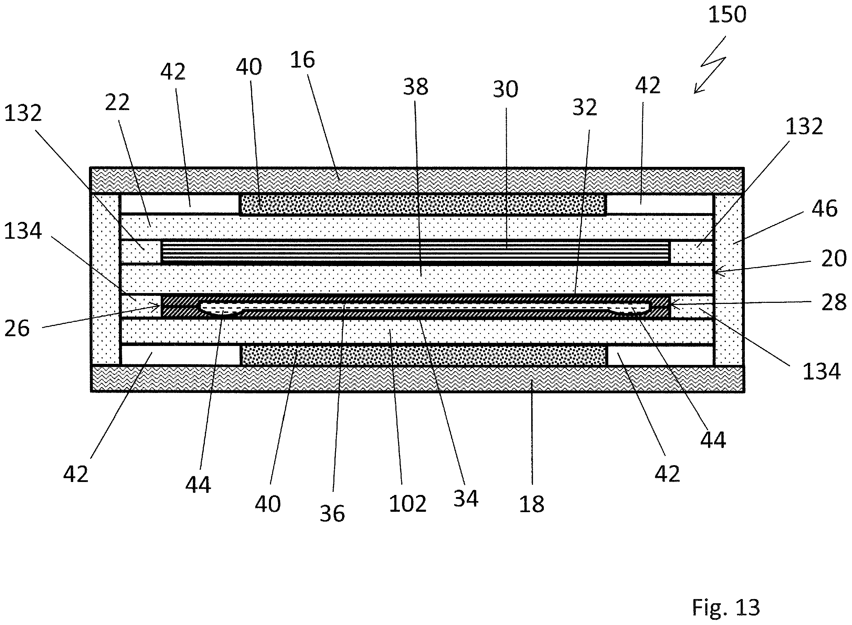

In Figur 13 ist eine Scheibenanordnung 150 dargestellt, die weitgehend derjenigen nach Figur 11 entspricht, sich von dieser aber dadurch unterscheidet, dass sie entsprechend der Ausführungsform nach Figur 9 eine zweite Zusatzschicht 40 aufweist, welche aber zwischen der in der Zeichnung oberen Klebefolie 22 und dem außen liegenden Scheibenkörper 16 angeordnet ist. Entsprechend ist eine untere bzw. innere Zusatzschicht 40 zwischen der Klebeschicht 102 und dem Scheibeninnenkörper 18 angeordnet bzw. unmittelbar an diese angrenzend. Die obere bzw. äußere Zusatzschicht 40 ist umlaufend von einem Leerraum 42 begrenzt und hat eine Grundfläche, die mit derjenigen der unteren Zusatzschicht 40 übereinstimmt. Die Polarisatorschicht 30 hat eine Grundfläche, die mit der Grundfläche der Flüssigkristallanordnung 28 korrespondiert. Entsprechend ist der umlaufende Rand der Polarisatorschicht 30 von einer TPU-Folie 132 begrenzt. Im Übrigen entspricht die Scheibenanordnung 150 derjenigen nach Figur 11.

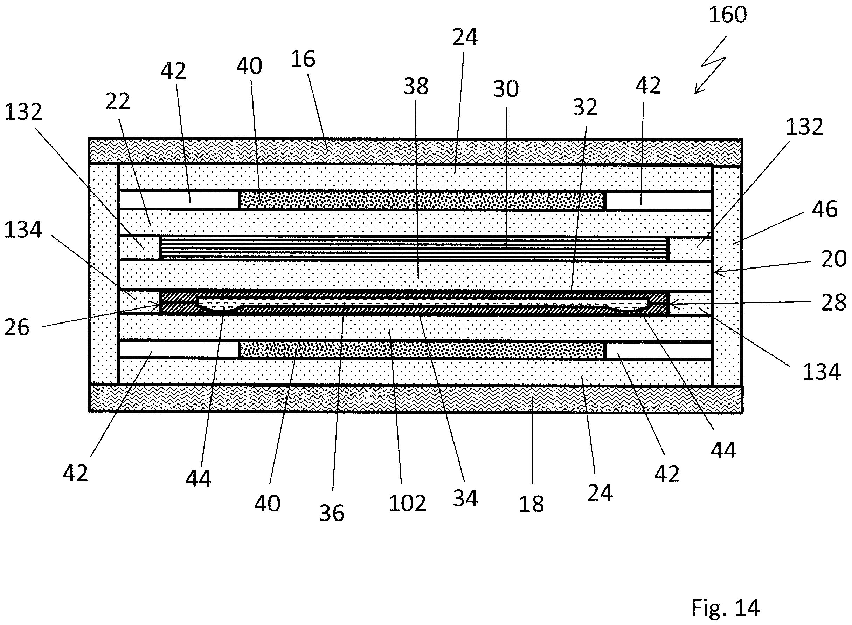

In Figur 14 ist eine Scheibenanordnung 160 dargestellt, welche weitgehend entsprechend der Ausführungsform nach Figur 13 ausgebildet ist, sich von dieser aber dadurch unterscheidet, dass der Verbund 20 zusätzlich sowohl angrenzend an den äußeren Scheibenkörper 16 als auch angrenzend an den Scheibeninnenkörper 18 jeweils eine weitere Klebefolie 24 bzw. 162 aus TPU aufweist, die mit ihrer der Flüssigkristallanordnung 28 zugewandten Innenseite direkt an die jeweilige, eine Verdrängerschicht darstellende Zusatzschicht 40 grenzt. Im Übrigen entspricht der Aufbau der Scheibenanordnung 160 demjenigen nach Figur 13.

### Bezugszeichenliste

- 10: Fahrzeugdach
- 12: Deckel
- 14: Festdachelement
- 16: Scheibenkörper
- 18: Scheibeninnenkörper
- 20: Verbund
- 22: Klebefolie
- 24: Klebefolie
- 26: Beschattungsanordnung
- 28: Flüssigkristallanordnung
- 30: Polarisatorschicht
- 32: Folie
- 34: Folie
- 36: Flüssigkristallzelle
- 38: Klebeschicht
- 40: Zusatzschicht
- 42: Leerraum
- 44: Flüssigkristallreservoir
- 46: Randversiegelung
- 50: Scheibenanordnung
- 52: Entkopplungsschicht
- 60: Scheibenanordnung
- 62: Leerraum
- 70: Scheibenanordnung
- 80: Scheibenanordnung
- 90: Scheibenanordnung
- 100: Scheibenanordnung
- 102: Klebeschicht
- 110: Scheibenanordnung
- 120: Scheibenanordnung
- 130: Scheibenanordnung
- 132: TPU-Folie
- 134: Streifen
- 140: Scheibenanordnung
- 150: Scheibenanordnung
- 160: Scheibenanordnung
- 162: Klebefolie

## Patentansprüche

1. Fahrzeugscheibe, umfassend einen plattenartigen Scheibenkörper (16), der eine einer Fahrzeugumgebung zugewandte Außenseite und eine der Außenseite abgewandte Innenseite hat, an die ein Verbund (20) angebunden ist, der einen Schichtaufbau hat, der mehrere, übereinander angeordnete Schichten umfasst, von denen eine eine Flüssigkristallanordnung (28), die zwei Folien (32, 34) und eine zwischen den beiden Folien (32, 34) angeordnete Flüssigkristallzelle (36) umfasst, und eine weitere eine Polarisatorschicht (30) ist, **dadurch gekennzeichnet, dass** mindestens eine Schicht des Schichtaufbaus eine Verdrängungsschicht ist, deren Grundfläche kleiner ist als die Grundfläche der Flüssigkristallanordnung (28), so dass die Flüssigkristallzelle (36) einen Randbereich hat, der gegenüber einem Zentralbereich, der mit der Verdrängungsschicht in Überdeckung ist, verdickt ist.

2. Fahrzeugscheibe nach Anspruch 1, **dadurch gekennzeichnet, dass** die Verdrängungsschicht von der Polarisatorschicht (30) gebildet ist.

3. Fahrzeugscheibe nach Anspruch 1 oder 2, **dadurch gekennzeichnet, dass** die Verdrängungsschicht von einer Zusatzschicht (40), insbesondere einer Zusatzfolie gebildet ist.

4. Fahrzeugscheibe nach Anspruch 3, **dadurch gekennzeichnet, dass** die Zusatzschicht (40) an die Flüssigkristallanordnung (28) grenzt.

5. Fahrzeugscheibe nach Anspruch 3, **dadurch gekennzeichnet, dass** die Zusatzschicht (40) an die Polarisatorschicht (30) grenzt.

6. Fahrzeugscheibe nach einem der Ansprüche 3 bis 5, **dadurch gekennzeichnet, dass** die Zusatzschicht (40) zwischen der Flüssigkristallanordnung (28) und der Polarisatorschicht (30) angeordnet ist.

7. Fahrzeugscheibe nach einem der Ansprüche 3 bis 6, **dadurch gekennzeichnet, dass** die Zusatzschicht (40) eine Dicke zwischen 10 µm und 500 µm hat.

8. Fahrzeugscheibe nach einem der Ansprüche 1 bis 7, **gekennzeichnet durch** einen Scheibeninnenkörper (18), der mit dem Schichtaufbau verklebt ist.

9. Fahrzeugscheibe nach Anspruch 8 in Verbindung mit Anspruch 3, **dadurch gekennzeichnet, dass** die Zusatzschicht (40) an den Scheibeninnenkörper (18) grenzt.

10. Fahrzeugscheibe nach einem der Ansprüche 1 bis 9, **dadurch gekennzeichnet, dass** der Schichtaufbau eine Klebeschicht (22) zur Anbindung an den Scheibenkörper (16) umfasst.

11. Fahrzeugscheibe nach einem der Ansprüche 1 bis 10, **dadurch gekennzeichnet, dass** der Schichtaufbau eine Klebeschicht (38) zwischen der Flüssigkristallanordnung (28) und der Polarisatorschicht (30) umfasst.

12. Fahrzeugscheibe nach Anspruch 10 oder 11, **dadurch gekennzeichnet, dass** die Klebeschicht (22, 38) aus einer Acrylatschicht, einer Schicht aus thermolastischem Polyurethan, einer Epoxidschicht, einer Silikonschicht, einer Polyethylenschicht oder aus einer Schicht aus einem vernetzenden Material, wie Ethylenvinylacetat (EVA) oder Polyvinylbutyral (PVB) gebildet ist.

13. Fahrzeugscheibe nach einem der Ansprüche 3 bis 7 und 9, **dadurch gekennzeichnet, dass** die Zusatzschicht (40) aus einer Acrylatschicht, einer Schicht aus thermolastischem Polyurethan, einer Epoxidschicht, einer Silikonschicht, einer Polyethylenschicht oder aus einer Schicht aus einem vernetzenden Material, wie Ethylenvinylacetat (EVA) oder Polyvinylbutyral (PVB), oder aus einer transparenten Kunststofffolie, die insbesondere aus Polyethylenterephtalat (PET), Polycarbonat (PC) oder einem Cycloolefin-Copolymer (COC) besteht, gebildet ist.

14. Fahrzeugscheibe nach einem der Ansprüche 1 bis 13, **dadurch gekennzeichnet, dass** der Randbereich der Flüssigkristallzelle (36) eine Breite zwischen 5 mm und 40 mm hat.

15. Fahrzeugscheibe nach einem der Ansprüche 1 bis 14, **dadurch gekennzeichnet, dass** der Schichtaufbau einen umlaufenden Rand hat, der von einer Randversiegelung umgriffen ist, die insbesondere aus einem Folienaufbau besteht.

## Claims

1. A vehicle window pane comprising a plate-like window pane body (16) which has an outer side which faces the surroundings of the vehicle and an inner side which faces away from the outer side and to which a composite (20) is connected, the composite (20) having a layer structure which comprises multiple layers disposed one on top of the other, one of the layers comprising a liquid crystal arrangement (28) which comprises two films (32, 34) and a liquid crystal cell (36) disposed between the two films (32, 34), and another one of the layers being a polarizer layer (30), **characterized in that** at least one layer of the layer structure is a displacement layer whose area is smaller than the area of the liquid crystal arrangement (28), the liquid crystal cell (36) thus having an edge portion which is thicker than a central portion covered by the displacement layer.

2. The vehicle window pane according to claim 1, **characterized in that** the displacement layer is formed by the polarizer layer (30).

3. The vehicle window pane according to claim 1 or 2, **characterized in that** the displacement layer is formed by an additional layer (40), in particular by an additional film.

4. The vehicle window pane according to claim 3, **characterized in that** the additional layer (40) is adjacent to the liquid crystal arrangement (28).

5. The vehicle window pane according to claim 3, **characterized in that** the additional layer (40) is adjacent to the polarizer layer (30).

6. The vehicle window pane according to any one of claims 3 to 5, **characterized in that** the additional layer (40) is disposed between the liquid crystal arrangement (28) and the polarizer layer (30).

7. The vehicle window pane according to any one of claims 3 to 6, **characterized in that** the additional layer (40) has a thickness between 10 µm and 500 µm.

8. The vehicle window pane according to any one of claims 1 to 7, **characterized by** a window pane inner body (18) which is glued to the layer structure.

9. The vehicle window pane according to claim 8 in connection with claim 3, **characterized in that** the additional layer (40) is adjacent to the window pane inner body (18).

10. The vehicle window pane according to any one of claims 1 to 9, **characterized in that** the layer structure comprises an adhesive layer (22) for being connected to the window pane body (16).

11. The vehicle window pane according to any one of claims 1 to 10, **characterized in that** the layer structure comprises an adhesive layer (38) between the liquid crystal arrangement (28) and the polarizer layer (30).

12. The vehicle window pane according to claim 10 or 11, **characterized in that** the adhesive layer (22, 38) is formed by an acrylate layer, a layer of thermoplastic polyurethane, an epoxy layer, a silicone layer, a polyethylene layer or of a layer made of a cross-linking material, such as ethylene-vinyl acetate (EVA) or polyvinyl butyral (PVB).

13. The vehicle window pane according to any one of claims 3 to 7 and 9, **characterized in that** the additional layer (40) is formed by an acrylate layer, a layer of thermoplastic polyurethane, an epoxy layer, a silicone layer, a polyethylene layer or of a layer made of a cross-linking material, such as ethylene-vinyl acetate (EVA) or polyvinyl butyral (PVB), or of a transparent plastic film, which consists in particular of polyethylene terephthalate (PET), polycarbonate (PC) or a cyclic olefin copolymer (COC).

14. The vehicle window pane according to any one of claims 1 to 13, **characterized in that** the edge portion of the liquid crystal cell (36) has a width between 5 mm and 40 mm.

15. The vehicle window pane according to any one of claims 1 to 14, **characterized in that** the layer structure has a circumferential edge which is surrounded by an edge sealing, which consists in particular of a film structure.

## Revendications

1. Vitre de véhicule comprenant un corps de vitre (16) en forme de plaque qui a un côté extérieur qui est tourné vers l'environnement du véhicule et un côté intérieur qui est détourné du côté extérieur et auquel une structure composite (20) est reliée, la structure composite (20) ayant une structure de couches qui comprend plusieurs couches disposées les unes sur les autres, une des couches étant un ensemble à cristaux liquides (28) qui comprend deux films (32, 34) et une cellule à cristaux liquides (36) disposée entre les deux films (32, 34), et une autre des couches étant une couche polarisante (30), **caractérisée en ce qu'**au moins une couche de la structure de couches est une couche de déplacement dont la surface de base est inférieure à la surface de base de l'ensemble à cristaux liquides (28), de sorte que la cellule à cristaux liquides (36) a une partie de bord qui est plus épaisse qu'une partie centrale couverte par la couche de déplacement.

2. Vitre de véhicule selon la revendication 1, **caractérisée en ce que** la couche de déplacement est formée par la couche polarisante (30).

3. Vitre de véhicule selon la revendication 1 ou 2, **caractérisée en ce que** la couche de déplacement est formée par une couche additionnelle (40), notamment par un film additionnel.

4. Vitre de véhicule selon la revendication 3, **caractérisée en ce que** la couche additionnelle (40) est adjacente à l'ensemble à cristaux liquides (28).

5. Vitre de véhicule selon la revendication 3, **caractérisée en ce que** la couche additionnelle (40) est adjacente à la couche polarisante (30).

6. Vitre de véhicule selon l'une quelconque des revendications 3 à 5, **caractérisée en ce que** la couche additionnelle (40) est disposée entre l'ensemble à cristaux liquides (28) et la couche polarisante (30).

7. Vitre de véhicule selon l'une quelconque des revendications 3 à 6, **caractérisée en ce que** la couche additionnelle (40) a une épaisseur entre 10 µm et 500 µm.

8. Vitre de véhicule selon l'une quelconque des revendications 1 à 7, **caractérisée par** un corps intérieur de vitre (18) qui est collé sur la structure de couches.

9. Vitre de véhicule selon la revendication 8 en association avec la revendication 3, **caractérisée en ce que** la couche additionnelle (40) est adjacente au corps intérieur de vitre (18).

10. Vitre de véhicule selon l'une quelconque des revendications 1 à 9, **caractérisée en ce que** la structure de couches comprend une couche adhésive (22) pour être reliée au corps de vitre (16).

11. Vitre de véhicule selon l'une quelconque des revendications 1 à 10, **caractérisée en ce que** la structure de couches comprend une couche adhésive (38) entre l'ensemble à cristaux liquides (28) et la couche polarisante (30).

12. Vitre de véhicule selon la revendication 10 ou 11, **caractérisée en ce que** la couche adhésive (22, 38) est formée par un couche d'acrylate, une couche de polyuréthane thermoplastique, une couche d'époxyde, une couche de silicone, une couche de polyéthylène ou par une couche en matière réticulante, telle que l'éthylène-acétate de vinyle (EVA) ou le polybutyral vinylique (PVB).

13. Vitre de véhicule selon l'une quelconque des revendications 3 à 7 et 9, **caractérisée en ce que** la couche additionnelle (40) est formée par un couche d'acrylate, une couche de polyuréthane thermoplastique, une couche d'époxyde, une couche de silicone, une couche de polyéthylène ou par une couche en matière réticulante, telle que l'éthylène-acétate de vinyle (EVA) ou le polybutyral vinylique (PVB), ou par un film plastique transparent qui est fait notamment en polytéréphtalate d'éthylène (PET), polycarbonate (PC) ou copolymère de cyclo-oléfine (COC).

14. Vitre de véhicule selon l'une quelconque des revendications 1 à 13, **caractérisée en ce que** la partie de bord de la cellule à cristaux liquides (36) a une largeur entre 5 mm et 40 mm.

15. Vitre de véhicule selon l'une quelconque des revendications 1 à 14, **caractérisée en ce que** la structure de couches a un bord circonférentiel qui est entouré par un sceau de bord qui est fait notamment d'une structure de films.
